# DEMANDE DE BREVET EUROPEEN

(11) **EP 1 808 994 A1**
(43) Date de publication de la demande: **18.07.2007**
(21) Numéro de dépôt: 06300028.5
(22) Date de dépôt: 12.01.2006
(51) Int. Cl.: H04L 29/06

(54) **Dispositif de commutation à transport universel de trames de paquets de données**

(71) Demandeur: Alcatel Lucent, 75008 Paris (FR)
(72) Inventeur: Dollo, Philippe, 22300 Lannion (FR); Stephan, Yannick, 22730 Tregastel (FR)
(74) Mandataire: Sciaux, Edmond

(57) **Abrégé**

Un dispositif (D) est dédié à la commutation de trames de paquets de données de types différents provenant d'au moins deux réseaux de transport (N1, N2) utilisant des couches protocolaires de transport différentes. Ce dispositif (D) comprend un module de commutation (MC) et au moins deux cartes d'accès (CA1, CA2) connectées chacune à l'un des réseaux et au module de commutation et comprenant chacune des moyens de traitement (MT) chargés, lorsqu'ils reçoivent une trame provenant d'un réseau source (N1) auquel ils sont connectés et destinée à un réseau de destination (N2), de supprimer de cette trame les couches protocolaires de transport qu'elle contient, puis d'adjoindre aux données utiles d'au moins un paquet de cette trame, avant de la transmettre au module de commutation (MC), un entête interne comportant au moins i) un champ d'identifiant de canal comportant une valeur représentative d'un canal assigné à la connexion empruntée par la trame lors de son établissement, ii) un champ de longueur comportant une valeur représentative du nombre d'octets que comporte le paquet considéré, et iii) un champ de type comportant des valeurs représentatives de caractéristiques des données utiles du paquet considéré.

## Description

L'invention concerne le domaine des réseaux de transport de paquets, et plus précisément les équipements de commutation utilisés pour commuter des paquets de données entre des réseaux de transport de paquets de types différents.

On entend ici par « équipement de commutation » tout équipement de réseau chargé de commuter des paquets de types différents, comme par exemple les autocommutateurs (tels que ceux de type E10) ou les passerelles média voix (ou MGWs pour « Media GateWays »), ou ceux utilisés dans des contrôleurs de station de base (ou BSC pour « Base Station Controller », ou RNC pour « Radio Network Controller ») ou dans des noeuds de type SGSN ou GGSN, entre des réseaux de types différents, tels que, notamment, les réseaux ATM, 3GPP ATM, IP et 3GPP IP.

Comme le sait l'homme de l'art, chaque type de réseau de transport dispose de ses propres piles (ou couches) de protocoles pour transporter des paquets de données. Par exemple, dans une passerelle média voix (ou MGW) classique les paquets qui sont reçus sur une carte d'accès (d'entrée) sont transférés vers une autre carte d'accès (de sortie) via un module de liaison assurant une fonction d'adaptation de format de trame. Ce module de liaison est par exemple une carte de traitement numérique qui assure également une nécessaire fonction d'adaptation d'encapsulation.

Dans la plupart des passerelles média voix (ou MGWs), une partie des couches du noyau de transport, comme par exemple les couches du protocole de transport RTP dans le cas d'un réseau lP, est terminée dans une carte de traitement numérique (par exemple un processeur de type DSP). Or, les ressources du DSP sont limitées et leur utilisation est en principe réservée aux traitements à valeur ajoutée, comme par exemple la compression de voix. Par ailleurs, en l'absence de paquets à modifier, le module de liaison ne fait qu'ajouter ou retirer les couches de transport concernées, ce qui augmente la complexité de la gestion des connexions et la latence (ou délai d'attente) globale des connexions, nécessite des capacités de traitement plus importantes, et augmente le coût de l'équipement de commutation.

Il a certes été proposé des mécanismes de transport interne orienté connexion. Mais, les mécanismes d'encapsulation agnostique correspondant n'ont pas encore été créés.

Aucune solution connue n'apportant une entière satisfaction, l'invention a donc pour but d'améliorer la situation.

Elle propose à cet effet un dispositif, dédié à la commutation de trames de paquets de données de types différents, provenant d'au moins deux réseaux de transport utilisant des couches protocolaires de transport différentes, et comprenant un module de commutation et au moins deux cartes d'accès connectées chacune à l'un des réseaux et au module de commutation.

Ce dispositif de commutation se caractérise par le fait que chacune de ses cartes d'accès comprend des moyens de traitement chargés, chaque fois qu'ils reçoivent une trame provenant d'un réseau source auquel ils sont connectés et destinée à un réseau de destination, de supprimer de cette trame les couches protocolaires de transport qu'elle contient, puis d'adjoindre aux données utiles d'au moins un paquet de cette trame (avant de la transmettre au module de commutation), un entête interne comportant au moins :
- un champ dit d'identifiant de canal, comportant une valeur représentative du canal qui a été assigné à la connexion empruntée par la trame lors de son établissement,
- un champ dit de longueur, comportant une valeur représentative du nombre d'octets que comporte le paquet concerné, et
- un champ dit de type, comportant des valeurs représentatives de caractéristiques des données utiles du paquet concerné.

Le dispositif selon l'invention peut comporter d'autres caractéristiques qui peuvent être prises séparément ou en combinaison, et notamment :
- ses moyens de traitement peuvent être chargés d'intégrer dans chaque entête interne un champ de séquence comportant une valeur représentative d'un intervalle de temps entre paquets et d'un numéro de séquence du paquet auquel cet entête interne est adjoint ;
- ses moyens de traitement peuvent être chargés d'intégrer dans chaque entête interne un champ dit d'agrégation comportant une valeur signalant si le paquet concerné est le dernier de la trame considérée ;
- ses moyens de traitement peuvent être chargés d'adjoindre un entête interne à chaque paquet contenu dans une trame ;
- ses moyens de traitement peuvent être chargés, lorsqu'ils reçoivent une trame provenant du module de commutation et comportant au moins un entête interne, de supprimer de cette trame l'entête interne qu'elle contient, puis d'adjoindre à la trame des couches protocolaires de transport choisies en fonction des valeurs des champs de chaque entête interne et du réseau de destination, avant de la transmettre sur la connexion définie par la valeur du champ d'identifiant de canal de l'entête interne ;
- il peut comprendre une carte de transcodage connectée au module de commutation et chargée, lorsqu'elle reçoit une trame, provenant d'une carte d'accès, via le module de commutation, et destinée à une autre carte d'accès, et comportant au moins un entête interne adjoint à au moins un paquet de données utiles présentant un premier codage, de convertir ce premier codage des données utiles en un second codage, puis de transmettre la trame au module de commutation afin qu'il la transmette à l'autre carte d'accès ;
   ➢ le module de commutation peut être chargé, en l'absence de conversion de codage à effectuer, de faire transiter chaque trame comportant au moins un entête interne adjoint par la carte de transcodage pendant une phase de négociation protocolaire préliminaire ;
- les caractéristiques des données utiles d'un paquet sont par exemple choisies parmi le type de codage, le mode de codage pour un type de codage considéré, le temps de paquet (ou « packet time ») du paquet considéré, le type de données utiles du paquet considéré, et le type du réseau source.

L'invention propose également un équipement de réseau, pour au moins deux réseaux de transport utilisant des couches protocolaires de transport différentes, comprenant un dispositif de commutation du type de celui présenté ci-avant.

Cet équipement se présente par exemple sous la forme d'une passerelle média voix (ou MGW), d'un contrôleur de station de base, ou d'un noeud de type SGSN ou GGSN.

L'invention est particulièrement bien adaptée, bien que de façon non exclusive, aux situations dans lesquelles un équipement de commutation est connecté à au moins deux réseaux de transport de types ATM et IP.

D'autres caractéristiques et avantages de l'invention apparaîtront à l'examen de la description détaillée ci-après, et des dessins annexés, sur lesquels :

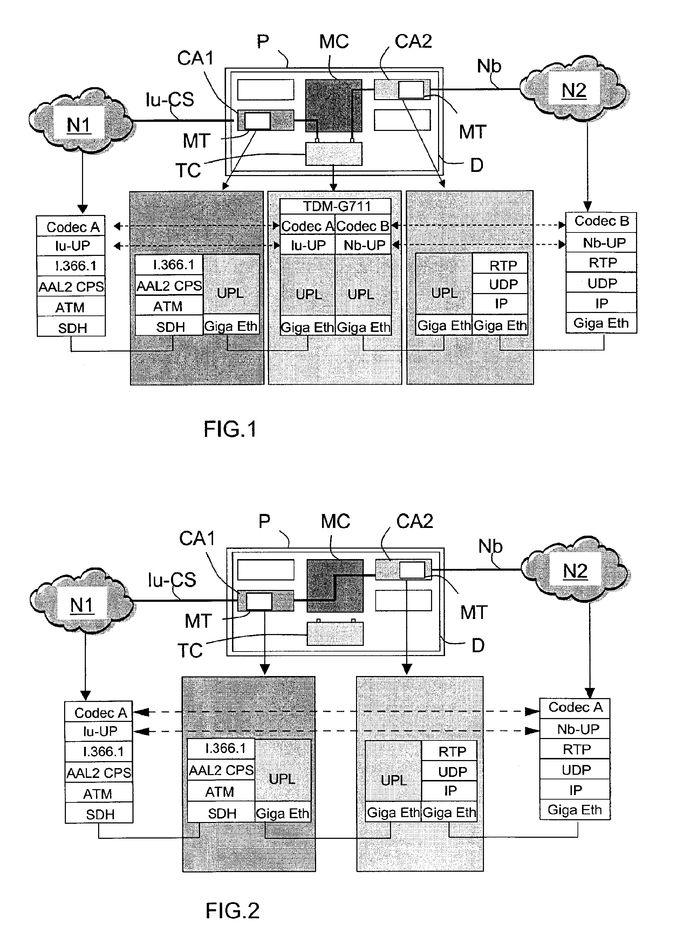

- la figure 1 illustre de façon très schématique et fonctionnelle un exemple de passerelle média voix, équipée d'un dispositif de commutation selon l'invention et couplée à des réseaux ATM et IP, dans le cas d'une conversion de codage de voix et/ou pendant une phase de négociation protocolaire préliminaire,
- la figure 2 illustre de façon très schématique et fonctionnelle un exemple de passerelle média voix, équipée d'un dispositif de commutation selon l'invention et couplé à des réseaux ATM et lP, en l'absence de conversion de codage de voix (et après la phase de négociation protocolaire préliminaire), et

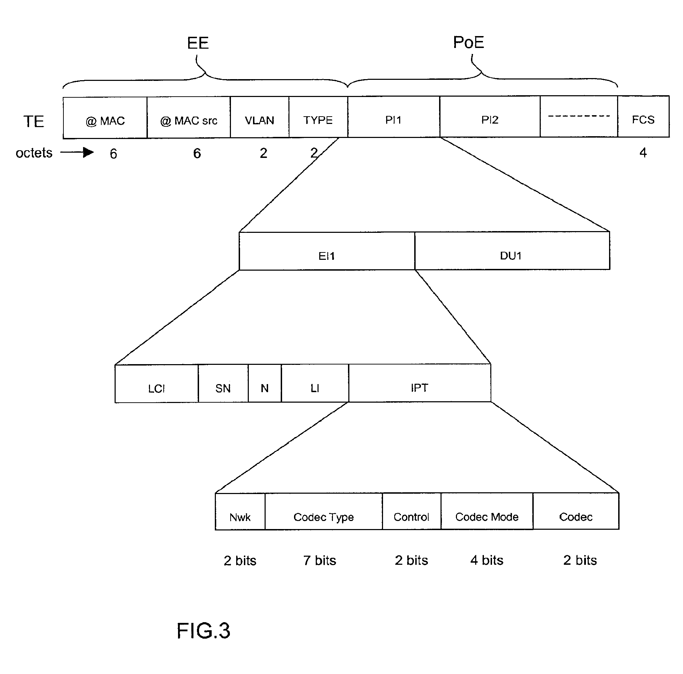

- la figure 3 illustre de façon schématique un exemple d'agrégation de paquets internes sur Ethernet comprenant chacun un entête interne selon l'invention et encapsulés dans une trame Ethernet.

Les dessins annexés pourront non seulement servir à compléter l'invention, mais aussi contribuer à sa définition, le cas échéant.

L'invention a pour objet de permettre le transport universel de trames de paquets de données au sein d'un équipement de commutation de trames connecté à au moins deux réseaux de transport de types différents.

Dans ce qui suit, on considère à titre d'exemple non limitatif que l'équipement de commutation n'est connecté qu'à deux réseaux de transport : un réseau asynchrone de type ATM (« Asynchronous Transfer Mode ») (N1), et un réseau de type IP (« Internet Protocol ») (N2), comme par exemple un réseau mobile 3GPP IP. L'équipement de commutation (P) est alors une passerelle média voix (ou MGW (pour « Média GateWay »)) à commutateur Ethernet (MC).

Mais l'invention n'est pas limitée à ces types de réseau de transport et d'équipement de commutation. Elle concerne en effet tous les réseaux de transport de paquets, et notamment ceux connus sous les acronymes ATM, 3GPP ATM, IP, 3GPP IP, MPLS et GMPLS, ainsi que tous les équipements de commutation, Ethernet ou non, capables de commuter des paquets de types différents, et notamment les autocommutateurs (tels que ceux de type E10), les passerelles média voix (ou MGWs), les contrôleurs de station de base (ou BSC pour « Base Station Controller », ou RNC pour « Radio Network Controller »), et les noeuds de type SGSN ou GGSN.

Dans les exemples illustrés sur les figures 1 et 2, l'équipement de commutation P (ici de type MGW) est connecté à titre d'exemple illustratif, d'une part, à un réseau d'accès radio terrestre UMTS (ou UTRAN (pour « UMTS Terrestrial Radio Access Network ») du réseau ATM N1, via une interface de type lu-CS, et d'autre part, à un réseau d'accès radio mobile 3GPP IP PLMN du réseau IP N2, via une interface de type Nb.

Plus précisément, l'équipement de commutation P comprend une première carte d'accès CA1, de type ATM, connectée au réseau ATM N1, une seconde carte d'accès CA2, de type IP, connectée au réseau IP N2, un module de commutation MC connecté aux première CA1 et seconde CA2 cartes d'accès, et une carte de transcodage TC connectée au module de commutation MC.

La première carte d'accès CA1 reçoit du réseau ATM N1 des trames comportant des cellules AAL2 sur ATM, dont le contenu comporte des données utiles (DU) destinées au réseau IP N2, et donc les couches protocolaires de transport qui sont utilisées par le réseau N1. Dans l'exemple illustré sur les figures 1 et 2, les couches protocolaires de transport utilisées par le réseau ATM N1 sont I.366.1 (ou I.366.2 dans une autre application que celle illustrée), AAL2 CPS, ATM et SDH.

La seconde carte d'accès CA2 reçoit du réseau IP N2 des trames Ethernet destinées au réseau ATM N1 et contenant des paquets de données encapsulés sur IP, et donc les couches protocolaires de transport qui sont utilisées par le réseau N2. Dans l'exemple illustré sur les figures 1 et 2, les couches protocolaires de transport utilisées par le réseau IP N2 sont RTP, UDP, IP et Giga Ethernet.

Le module de commutation MC est chargé d'aiguiller les trames (TE) qu'il reçoit de l'une des première CA1 et seconde CA2 cartes d'accès vers l'autre carte d'accès CA2 ou CA1, éventuellement via la carte de transcodage TC.

La carte de transcodage TC est chargée de convertir les données qui sont contenues dans les paquets des trames (TE) (qu'il reçoit du module de commutation MC) et qui sont codées selon un premier codage (CODEC A), respectivement un second codage (CODEC B), en données codées selon le second codage (CODEC B), respectivement le premier codage (CODEC A).

On notera que lorsque les données sont codées, mais ne doivent pas faire l'objet d'une conversion de codage (du fait que les deux réseaux N1 et N2 utilisent un même CODEC), la carte de transcodage TC reçoit malgré tout les trames (TE) pendant la phase de négociation protocolaire préliminaire car c'est elle qui termine la couche lu et donc qui négocie les paramètres du protocole lu de gestion du transport de données (ensuite elle n'intervient plus, sauf dans certains cas particuliers, comme par exemple pour l'insertion d'annonces).

Selon l'invention, chaque carte d'accès CA1, CA2 comporte un module de traitement MT chargé tout d'abord de supprimer les couches protocolaires de transport qui sont contenues dans les trames qui proviennent du réseau (source) N1 ou N2 auquel il est connecté, et qui sont destinées au réseau (de destination) N2 ou N1. De la sorte, chaque carte d'accès CA1, CA2 constitue le lieu de « terminaison » des couches protocolaires de transport du réseau auquel elle est connectée.

Par exemple, lorsque la première carte d'accès CA1 reçoit une trame du réseau ATM N1, son module de traitement MT supprime (ici) les couches 1.366.1 (ou 1.366.2), AAL2 CPS, ATM et SDH. De même, lorsque la seconde carte d'accès CA2 reçoit une trame (Ethernet) du réseau IP N2, son module de traitement MT supprime (ici) les couches RTP, UDP, IP et Giga Ethernet.

Chaque module de traitement MT est également chargé, une fois qu'il a procédé à la suppression des couches protocolaires de transport d'une trame reçue, d'adjoindre aux données utiles DU d'au moins un paquet de cette trame un entête interne EI particulier, de manière à constituer une trame « universelle » TE. On notera qu'une trame universelle TE peut contenir soit un unique paquet, soit une agrégation d'au moins deux paquets. Dans ce dernier cas, il est préférable d'adjoindre à chaque paquet de la trame universelle TE un entête interne El selon l'invention.

Ci-après, on appelle paquet interne Pli (i>0) un paquet d'une trame universelle TE auquel a été adjoint un entête interne El selon l'invention, après extraction des couches protocolaires de transport.

Un entête interne EI comprend toutes les informations nécessaires à l'identification par le récipiendaire des caractéristiques des données d'au moins un paquet contenu dans une trame universelle TE. Ces informations sont déduites de celles qui sont contenues dans certaines des couches protocolaires de transport.

Chaque entête interne El est inséré dans une trame universelle TE, juste avant les données utiles DU correspondantes, sans traitement spécifique particulier.

Selon l'invention, chaque entête interne EI comporte au moins trois champs et de préférence quatre, voire même cinq comme illustré schématiquement sur la figure 3.

Un champ LCI, dit « champ d'identifiant de canal », comporte une valeur (ou un identifiant) représentative du canal qui a été assigné à la connexion empruntée par sa trame universelle TE lors de son établissement. Cette valeur est utilisée par la carte d'accès qui est connectée au réseau destinataire pour retrouver le contexte du canal de connexion qu'elle doit utiliser en interne pour transmettre la trame au réseau auquel elle est connectée. Par exemple, la valeur du champ LCI est codée par 18 bits.

Un champ LI, dit « champ de longueur », comporte une valeur représentative du nombre d'octets que comporte le paquet interne Pli dont il fait partie, en dehors de l'entête interne El. En d'autres termes, la valeur du champ LI représente le nombre d'octets définissant les données utiles DU du paquet initialement reçu et auquel a été adjoint l'entête interne El. Par exemple, la valeur du champ LI est codée par 11 bits.

Un champ IPT, dit « champ de type », comporte des valeurs représentatives des caractéristiques des données utiles DU, du paquet interne Pli dont il fait partie au sein d'une trame universelle TE, lesquelles sont nécessaires à la carte d'accès connectée au réseau destinataire pour reformer une trame classique.

Les caractéristiques qui sont concernées par le champ de type IPT varient selon les types des réseaux de transport et selon les types des données utiles DU des paquets. Par exemple, dans le cas du transport de données de voix entre des réseaux de type ATM N1 et de type IP N2, les caractéristiques sont choisies parmi le type de codage (CODEC), le mode de codage pour un type de codage (CODEC) considéré, le temps de paquet (ou « packet time », ou encore « paquetisation ») du paquet considéré (c'est-à-dire le temps de constitution d'un paquet, fonction de l'horloge d'échantillonnage), le type des données utiles DU du paquet considéré, et le type du réseau source.

Dans l'exemple non limitatif illustré sur la figure 3, le champ de type IPT comporte toutes les caractéristiques précitées dans des sous-champs différenciés :
- « Nwk » est le type du réseau source (il est par exemple codé sur 2 bits en présence de seulement deux réseaux),
- « Codec Type » est le type de codage (par exemple CODEC A ou CODEC B - il est par exemple codé sur 7 bits),
- « Control » est le type des données utiles DU du paquet considéré (il est par exemple codé sur 2 bits - par exemple, la valeur 00 désigne des données utiles normales tandis que la valeur 01 désigne des données utiles nulles),
- « Codec Mode » est le mode de codage pour le type de codage défini par le champ Codec Type (par exemple le mode de codage est égal à 16 kilobits/s pour le type de codage G726 - il est par exemple codé sur 4 bits), et
- « Codec Delay » est le temps de paquet du paquet considéré (par exemple 10 ou 20 ms - il est par exemple codé sur 2 bits).

Un premier champ additionnel SN, dit « champ de séquence », peut par exemple comporter une valeur représentative de l'intervalle de temps entre paquets et du numéro de séquence du paquet interne Pli dont il fait partie. Cette valeur permet de contrôler le séquencement des paquets et l'intervalle de temps entre paquets, et donc de mettre en oeuvre un mécanisme de détection de perte de paquet(s).

Un second champ additionnel N, dit « champ d'agrégation », peut par exemple comporter une valeur signalant si le paquet interne Pli dont il fait partie est le dernier de la trame universelle TE. Ce champ d'agrégation N permet d'agréger dans une même trame universelle TE plusieurs paquets de manière à augmenter la bande passante dans l'équipement de commutation P. Par exemple, la valeur du champ N est codée par 1 bit.

Comme cela est illustré sur la figure 3, une trame universelle TE qui est transmise par une carte d'accès CA1, CA2 au module de commutation MC, est donc constituée :
- d'un entête Ethernet EE comprenant classiquement un champ d'adresse de destination MAC (« @MACdest »), un champ d'adresse source MAC (« @MACsrc »), un champ identifiant une connexion de réseau local virtuel (« VLAN »), et un champ identifiant le type d'encapsulation des paquets (« TYPE »), par exemple paquet sur trame Ethernet (ou « Packet over Ethernet Frame »),
- au moins un premier paquet interne PI1 constitué d'un entête interne EI1 et des données utiles DU1 contenues dans le premier paquet de la trame initialement reçue (avant traitement par le module de traitement MT),
- un éventuel deuxième paquet interne PI2 constitué d'un entête interne (EI2) et des données utiles (DU2) contenues dans le deuxième paquet de la trame initialement reçue (avant traitement par le module de traitement MT),
- un ou plusieurs autres paquets internes Pli (i>2), et
- un champ de contrôle d'intégrité de trame FCS (ou « Frame Check Sequence »).

Sur la figure 3, la partie de la trame universelle TE dédiée aux paquets internes Pli est référencée PoE.

Ce que le module de commutation MC fait des trames universelles TE qu'il reçoit d'une carte d'accès CA1, CA2 dépend d'au moins deux paramètres : un besoin de conversion de codage et la phase de transmission.

Si l'on se trouve dans une phase de négociation protocolaire préliminaire, le module de commutation MC adresse la trame universelle TE reçue à la carte de transcodage TC, qu'il faille ou non effectuer une conversion de codage. La carte de transcodage TC négocie alors les paramètres de gestion du protocole lu, puis elle renvoie la trame universelle TE vers le module de commutation MC, qui l'aiguille alors vers la carte d'accès qui est connectée au réseau destinataire.

Si l'on n'est pas dans la phase de négociation protocolaire préliminaire mais qu'une conversion de codage doit être effectuée (par exemple du CODEC A vers le CODEC B), le module de commutation MC adresse la trame universelle TE reçue à la carte de transcodage TC. La carte de transcodage TC effectue la conversion de codage des données utiles DU contenues dans chaque paquet interne Pli de la trame universelle TE, puis elle renvoie la trame universelle TE convertie vers le module de commutation MC, qui l'aiguille alors vers la carte d'accès qui est connectée au réseau destinataire. Cette situation est illustrée schématiquement sur la figure 1.

La carte de transcodage TC connaît chaque codage utilisé par chaque réseau auquel son dispositif de commutation D est connecté. Par conséquent, lorsqu'elle reçoit une trame universelle TE, elle lit le champ définissant le codage des données (par exemple CODEC A), puis elle détermine en interne le codage utilisé par le réseau destinataire (par exemple CODEC B) et procède à la conversion (par exemple du CODEC A vers le CODEC B).

De même, la carte de transcodage TC connaît chaque type d'interface utilisée pour connecter son dispositif de commutation D aux réseaux de transport. Par conséquent, lorsqu'elle reçoit une trame universelle TE, elle lit le champ définissant le type d'interface de connexion au réseau source (par exemple lu dans le cas du réseau ATM N1), puis elle détermine en interne le type d'interface de connexion au réseau destinataire (par exemple Nb dans le cas du réseau IP N2) et procède au remplacement du champ définissant le type d'interface de connexion (par exemple lu-UP est changé en Nb-UP).

Si l'on n'est pas dans la phase de négociation protocolaire préliminaire et qu'il n'y a pas de conversion de codage à effectuer, le module de commutation MC aiguille directement la trame universelle TE vers la carte d'accès qui est connectée au réseau destinataire. Cette situation est illustrée schématiquement sur la figure 2.

Lorsqu'une carte d'accès CA1, CA2 reçoit une trame universelle TE du module de commutation MC, son module de traitement MT commence tout d'abord par supprimer de cette trame TE, et plus précisément de chacun de ses paquets internes Pli, chaque entête interne Eli. Puis, il détermine les couches protocolaires de transport qui doivent être adjointes à la trame résultante en fonction des valeurs des champs de chaque entête interne Eli supprimé et du réseau de destination (par exemple N2 (ou N1)).

Dans les exemples illustrés sur les figures 1 et 2, lorsque c'est la première carte d'accès CA1 qui reçoit une trame universelle TE, elle doit adjoindre à la trame qui en résulte et qui est destinée au réseau ATM N1, les couches protocolaires de transport I.366.1 (ou I.366.2), AAL2 CPS, ATM et SDH. De même, lorsque c'est la seconde carte d'accès CA2 qui reçoit une trame universelle TE, elle doit adjoindre à la trame Ethernet qui en résulte et qui est destinée au réseau lP N2, les couches protocolaires de transport RTP, UDP, IP et Giga Ethernet.

Une fois que le module de traitement MT d'une carte d'accès CA1, CA2 a déterminé les couches protocolaires de transport, il les intègre dans la trame afin qu'elle soit transmise au réseau destinataire N1, N2 sur la connexion qui est définie par la valeur du champ d'identifiant de canal de l'entête interne Eli précédemment supprimé.

Le dispositif de commutation D selon l'invention, et notamment le module de traitement MT de ses cartes d'accès et son éventuelle carte de transcodage TC, peuvent être réalisés sous la forme de circuits électroniques, de modules logiciels (ou informatiques), ou d'une combinaison de circuits et de logiciels.

Grâce à l'invention, les performances globales de l'équipement de commutation P sont sensiblement améliorées, et le coût par port d'entrée/sortie de l'équipement de commutation P peut être réduit de façon significative. Par ailleurs, l'invention permet d'utiliser des cartes de transcodage TC indépendantes des interfaces de transport et donc des protocoles de transport utilisés par les réseaux de transport. En outre, le transport universel de trames au sein de l'équipement de commutation P satisfait aux conditions requises par la commutation directe de trames sans transcodage ou TrFO (« Transcoder Free Operation »).

L'invention ne se limite pas aux modes de réalisation de dispositif de commutation et d'équipement de réseau décrits ci-avant, seulement à titre d'exemple, mais elle englobe toutes les variantes que pourra envisager l'homme de l'art dans le cadre des revendications ci-après.

## Revendications

1. Dispositif (D) de commutation de trames de paquets de données de types différents provenant d'au moins deux réseaux de transport (N1, N2) utilisant des couches protocolaires de transport différentes, comprenant un module de commutation (MC) et au moins deux cartes d'accès (CA1, CA2) connectées chacune à l'un desdits réseaux et audit module de commutation, **caractérisé en ce que** chaque carte d'accès (CA1, CA2) comprend des moyens de traitement (MT) agencés, à réception d'une trame provenant d'un réseau source (N1) auquel ils sont connectés et destinée à un réseau de destination (N2), pour supprimer de cette trame les couches protocolaires de transport qu'elle contient, puis pour adjoindre aux données utiles d'au moins un paquet de cette trame, avant de la transmettre audit module de commutation (MC), un entête interne (El) comportant au moins i) un champ d'identifiant de canal comportant une valeur représentative d'un canal assigné à la connexion empruntée par ladite trame lors de son établissement, ii) un champ de longueur comportant une valeur représentative du nombre d'octets que comporte ledit paquet, et iii) un champ de type comportant des valeurs représentatives de caractéristiques des données utiles dudit paquet.

2. Dispositif selon la revendication 1, **caractérisé en ce que** lesdits moyens de traitement (MT) sont agencés pour intégrer dans chaque entête interne (El) un champ de séquence comportant une valeur représentative d'un intervalle de temps entre paquets et d'un numéro de séquence du paquet auquel ledit entête interne est adjoint.

3. Dispositif selon l'une des revendications 1 et 2, **caractérisé en ce que** lesdits moyens de traitement (MT) sont agencés pour intégrer dans chaque entête interne (El) un champ d'agrégation comportant une valeur signalant si ledit paquet est le dernier de ladite trame considérée.

4. Dispositif selon l'une des revendications 1 à 3, **caractérisé en ce que** lesdits moyens de traitement (MT) sont agencés pour adjoindre un entête interne à chaque paquet contenu dans une trame.

5. Dispositif selon l'une des revendications 1 à 4, **caractérisé en ce que** lesdits moyens de traitement (MT) sont agencés, à réception d'une trame provenant dudit module de commutation (MC) et comportant au moins un entête interne (El), pour supprimer de cette trame ledit entête interne (El) qu'elle contient, puis pour adjoindre à ladite trame des couches protocolaires de transport choisies en fonction des valeurs des champs dudit entête interne (El) et dudit réseau de destination (N2), avant de la transmettre sur la connexion définie par la valeur du champ d'identifiant de canal dudit entête interne (El).

6. Dispositif selon l'une des revendications 1 à 5, **caractérisé en ce qu'**il comprend une carte de transcodage (TC) connectée audit module de commutation (MC) et agencée, à réception d'une trame, provenant d'une carte d'accès (CA1), via ledit module de commutation (MC), et destinée à une autre carte d'accès (CA2), et comportant au moins un entête interne (El) adjoint à au moins un paquet de données utiles présentant un premier codage, pour convertir ledit premier codage des données utiles en un second codage, puis pour transmettre ladite trame audit module de commutation (MC) afin qu'il la transmette à ladite autre carte d'accès (CA2).

7. Dispositif selon la revendication 6, **caractérisé en ce que** ledit module de commutation (MC) est agencé, en l'absence de conversion de codage à effectuer, pour faire transiter par ladite carte de transcodage (TC) chaque trame comportant au moins un entête interne adjoint (El) pendant une phase de négociation protocolaire préliminaire.

8. Dispositif selon la revendication 6, **caractérisé en ce que** ledit module de commutation (MC) est agencé, en l'absence de conversion de codage à effectuer, pour aiguiller directement une trame sans la faire transiter par ladite carte de transcodage (TC), en dehors de toute phase de négociation protocolaire préliminaire.

9. Dispositif selon l'une des revendications 1 à 8, **caractérisé en ce que** lesdites caractéristiques des données utiles d'un paquet sont choisies dans un groupe comprenant au moins un type de codage des données utiles, un mode de codage pour un type de codage considéré, un temps de paquet du paquet considéré, un type de données utiles du paquet considéré, et un type de réseau source.

10. Equipement de réseau (P) pour au moins deux réseaux de transport (N1, N2) utilisant des couches protocolaires de transport différentes, **caractérisé en ce qu'**elle comprend un dispositif de commutation (D) selon l'une des revendications précédentes.

11. Equipement selon la revendication 10, **caractérisé en ce qu'**il est choisi dans un groupe comprenant au moins une passerelle média voix, un contrôleur de station de base, un noeud de type SGSN, et un noeud de type GGSN.
